# EUROPÄISCHE PATENTSCHRIFT

(11) **EP 1 452 769 B1**
(45) Veröffentlichungstag und Bekanntmachung des Hinweises auf die Patenterteilung: **06.07.2005**
(21) Anmeldenummer: 04002115.6
(22) Anmeldetag: 31.01.2004
(51) Int. Cl.: F16F 15/26

(54) **Rädertrieb einer Brennkraftmaschine**
Gear wheel drive of an internal combustion engine
Entraînement par engrenages d'un moteur à combustion interne

(30) Priorität: 01.03.2003 DE 10309023
(43) Veröffentlichungstag der Anmeldung: 01.09.2004
(73) Patentinhaber: DEUTZ Aktiengesellschaft, 51063 Köln (DE)
(72) Erfinder: Bauer, Lothar, 51109 Köln (DE); Lemme, Werner, 51503 Rösrath (DE)

(56) Entgegenhaltungen:
- DE-A- 4 128 432
- DE-A- 10 226 076
- US-A- 3 452 610
- US-A- 4 509 474
- PATENT ABSTRACTS OF JAPAN Bd. 0174, Nr. 23 (M-1458), 6. August 1993 (1993-08-06) & JP 5 086825 A (KUBOTA CORP), 6. April 1993 (1993-04-06)

## Beschreibung

Die Erfindung betrifft eine Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf unter Bildung eines Brennraums abgedeckten Zylinder bewegbar ist und in dem Zylinderkopf Gaswechselventile angeordnet sind, die von einer Nockenwelle betätigt werden, die über ein Getriebe mit einem auf der Kurbelwelle angeordneten Rädertriebzahnrad verbunden ist, wobei weiterhin in den Brennraum von einem Einspritzpumpenelement geförderter Kraftstoff einspritzbar ist sowie ein Massenausgleichsgetriebe mit zwei Ausgleichswellen vorhanden ist.

Eine derartige Brennkraftmaschine ist aus der DE 41 28 432 A1 bekannt. Bei dieser Brennkraftmaschine ist ein Massenausgleichsgetriebe verbaut, das direkt in das Kurbelgehäuse der Brennkraftmaschine integriert ist. Einerseits ergibt sich dadurch die Möglichkeit, die Lagerstellen für die Ausgleichswellen des Massenausgleichsgetriebes bei der Bearbeitung des Kurbelgehäuses in einem gemeinsamen Arbeitsgang bei der Bearbeitung beziehungsweise Fertigung der Lagerstellen für beispielsweise die Kurbelwelle, Zwischenräder und die Nockenwelle zu fertigen. Dadurch ist eine sehr genaue Einhaltung der Abstände der einzelnen Lagerstellen zueinander möglich. Andererseits ist insbesondere bei Brennkraftmaschinen, die als Industriemotoren, Nutzfahrzeugmotoren oder Baumaschinenmotoren eingesetzt werden, ein Massenausgleichsgetriebe nur bedarfsweise erforderlich. Für den Fall, dass kein Massenausgleichsgetriebe benötigt wird, stellt zumindest die Bearbeitung der Lagerstellen für das Massenausgleichsgetriebe in dem Kurbelgehäuse einen zusätzliche Kosten verursachenden Mehraufwand dar.

Der Erfindung liegt die Aufgabe zugrunde, eine Brennkraftmaschine bereitzustellen, an die wahlweise ein Massenausgleichsgetriebe anbaubar ist, wobei bei Nichtanbau keine vermeidbaren aufwendigen Bearbeitungsvorgänge an dem Kurbelgehäuse erforderlich sind, und andererseits bei Anbau des Massenausgleichsgetriebes dies möglichst einfach erfolgen soll.

Diese Aufgabe wird dadurch gelöst, dass das Massenaugleichsgetriebe in einem Getrieberahmen angeordnet unterhalb der Kurbelwelle an das Kurbelgehäuse angebaut ist und von einem auf der Kurbelwelle angeordneten Massenwellentriebzahnrad angetrieben ist, das axial neben dem Rädertriebzahnrad angeordnet ist. Durch diese Ausbildung sind zunächst einmal, abgesehen von mit geringem Aufwand zu fertigenden Befestigungsgewinden für den Getrieberahmen, an dem Kurbelgehäuse keine unnötigen Bearbeitungsvorgänge erforderlich. Das Massenwellentriebzahnrad wird nur bei Anbau eines Massenausgleichsgetriebes auf der Kurbelwelle montiert und steht direkt mit dem Massenausgleichsgetriebe beziehungsweise mit einem Ausgleichswellenzwischenrad, das in dem Getrieberahmen gelagert ist, in Verbindung. Der Antrieb des Massenausgleichsgetriebes mit einem eigenständigen Massenwellentriebzahnrad bietet den Vorteil, dass bei der Auswahl dieses Zahnrads auf besondere Erfordernisse zum Antrieb des Massenausgleichsgetriebes eingegangen werden kann. Ein solches Erfordernis ist insbesondere der Ausgleich von sich bei der mechanischen Fertigung ergebenden Toleranzen im Abstand zwischen dem Massenwellentriebzahnrad und dem Massenausgleichsgetriebe, insbesondere dem später genannten Ausgleichswellenzwischenrad. Dadurch, dass für den Antrieb des Massenausgleichsgetriebes ein eigenes Massenwellentriebzahnrad vorhanden ist, kann dieses einen Eingriffswinkel aufweisen, mit dem Abstandsschwankungen zwischen dem Kurbelgehäuse und dem Getrieberahmen und somit zwischen den entsprechenden Zahnrädern ausgeglichen werden können. Hierbei ist weiterhin zu berücksichtigen, dass in dem Zahnradgetriebe zum Antrieb der Nockenwelle durch auftretende hohe Wechselmomente besonders auch akustisch Gesichtspunkte berücksichtigt werden müssen. Dies ist bei einem Massenausgleichsgetriebe weniger der Fall, so dass hier Zahnradpaarungen verwendet werden können, die unter rein akustischen Gesichtspunkten weniger vorteilhaft wären.

In Weiterbildung der Erfindung weist das Massenwellentriebzahnrad einen Eingriffswinkel von 11,5° auf. Mit einem solchen Eingriffswinkel kann im Gegensatz zu einem sonst normalen Eingriffswinkel von 18 - 20° eine Abstandsschwankung von bis zu ± 0,8 mm der entsprechenden Bauteile beziehungsweise Wellen ohne sonstige Maßnahmen aufgefangen bzw. ausgeglichen werden.

In Weiterbildung der Erfindung sind zwei miteinander kämmende Ausgleichswellenzahnräder vorgesehen und es ist axial neben einem Ausgleichswellenzahnrad ein Antriebszahnrad angeordnet, das über ein Ausgleichswellenzwischenzahnrad mit dem Massentriebzahnrad in Eingriff steht. Durch diese Kombination ist einerseits das einzustellenden Übersetzungsverhältnis realisierbar, andererseits wird durch das Ausgleichswellenzwischenrad der Achsabstand zwischen der Kurbelwelle und den beiden Ausgleichswellen überbrückt.

In weiterer Ausgestaltung der Erfindung weist das Rädertriebzahnrad einen Eingriffswinkel von 18° - 20°, insbesondere 18,5° auf. Dieser Eingriffswinkel ist - wie schon zuvor ausgeführt - für ein optimiertes akustisches Verhalten günstig.

In weiterer Ausgestaltung der Erfindung steht ein Nockenwellenzahnrad über ein Stufenzahnrad mit dem Rädertriebzahnrad in Eingriff. Mit dem Einsatz des Stufenzahnrads wird das notwendige Übersetzungsverhältnis unter dem Aspekt eingestellt, dass das Nockenwellenzahnrad einen maximalen Durchmesser aufweist, der innerhalb vorgegebener Konturen liegt. Eine Vorgabe für die Kontur ist insbesondere die Regelstange für die Einzeleinspritzpumpen, die bei der vorliegenden Brennkraftmaschine direkt von auf der Nockenwelle angeordneten Einspritzpumpennocken angetrieben werden und wobei somit die Regelstange zwangsweise in räumlicher Nähe zu der Nockenwelle angeordnet ist.

In Weiterbildung der Erfindung steht eine erste Hydraulikpumpe über ein Hydraulikpumpenzwischenrad mit dem Rädertriebzahnrad in Eingriff. Durch den Antrieb einer Hydraulikpumpe wird konstant ein Antriebsmoment abgefordert, das positive Auswirkungen auf das Geräuschverhalten des Getriebes hat.

In weiterer Ausgestaltung der Erfindung steht ein Ölpumpenzahnrad direkt mit dem Rädertriebzahnrad in Eingriff und es kann weiterhin eine zweite Hydraulikpumpe von dem Ölpumpenzahnrad angetrieben werden. Damit ist ein zweiter Leistungsabnahmestrang gebildet, der ebenfalls mit dem akustisch optimierten Teil des Getriebes zusammenwirkt.

In weiterer Ausgestaltung der Erfindung sind das Hydraulikpumpenzwischenzahnrad und das Nockenwellenzahnrad baugleich. Dies ist bezüglich einer geringen Teilevielfalt vorteilhaft.

Alternativ kann an der Brennkraftmaschine anstelle des (Räder)-Getriebes ein Zahnriemengetriebe verbaut werden. In diesem Falle wird das Rädertriebgehäuse durch ein Zahnriementriebgehäuse ersetzt. Beide Gehäuse sind so ausgebildet, dass die Außenmaße der Brennkraftmaschine gleich sind. Der Anbau eines Massenausgleichsgetriebes ist dann nur möglich, wenn das Massenwellentriebzahnrad öldicht von dem Zahnriementriebgehäuse getrennt ist.

Weitere vorteilhafte Ausgestaltungen der Erfindung sind der Zeichnungsbeschreibung zu entnehmen, in der ein in den Figuren dargestelltes Ausführungsbeispiel näher beschrieben ist.

Es zeigen
- Fig. 1: eine perspektivische Stirnansicht der Brennkraftmaschine mit teilmontiertem Rädertrieb ohne Ausgleichsgetriebe,
- Fig. 2: das Rädertriebgehäuse mit mechanischem Reglermesswerk und
- Fig. 3: das Rädergetriebe mit Ausgleichsgetriebe.

Die in den Figuren dargestellte Brennkraftmaschine ist insbesondere als 4-zylindrige oder 6-zylindrige Hubkolbenbrennkraftmaschine ausgebildet und weist ein ansatzweise dargestelltes Kurbelgehäuse auf, in dem die Kurbelwelle 2 gelagert ist. Der von der Kurbelwelle 2 gezeigte Fortsatz durchdringt die stirnseitige Kurbelgehäusewand und ragt in ein an dieser Kurbelgehäusewand montiertes, vorzugsweise (druck)-gegossenes Rädertriebgehäuse 3. Das Rädertriebgehäuse 3 ist beidseitig im Wesentlichen offen ausgestaltet und an der Kurbelgehäusestirnwand unter Einfügung von zumindest einer Dichtung über zwei Zentrierbuchsen ausgerichtet und mittels einer Vielzahl Befestigungsschrauben 4 befestigt. Im Bereich neben den Befestigungsschrauben 4 weist das Rädertriebgehäuse 3 Gewindebohrungen 5 auf, in die nicht dargestellte Deckelschrauben, die einen ebenfalls nicht dargestellten Rädertriebdeckel durchdringen, eingeschraubt werden. Der druckgussfähige Rädertriebdeckel nimmt einen Wellendichtring zur Abdichtung der durchdringenden Kurbelwelle 2 und ebenfalls zumindest in der Saugmotorversion eine Kurbelgehäuseentlüftungsdose auf. Weiterhin ist der Rädertriebdeckel akustisch optimiert, insbesondere akustisch von dem Getrieberahmen abgekoppelt.

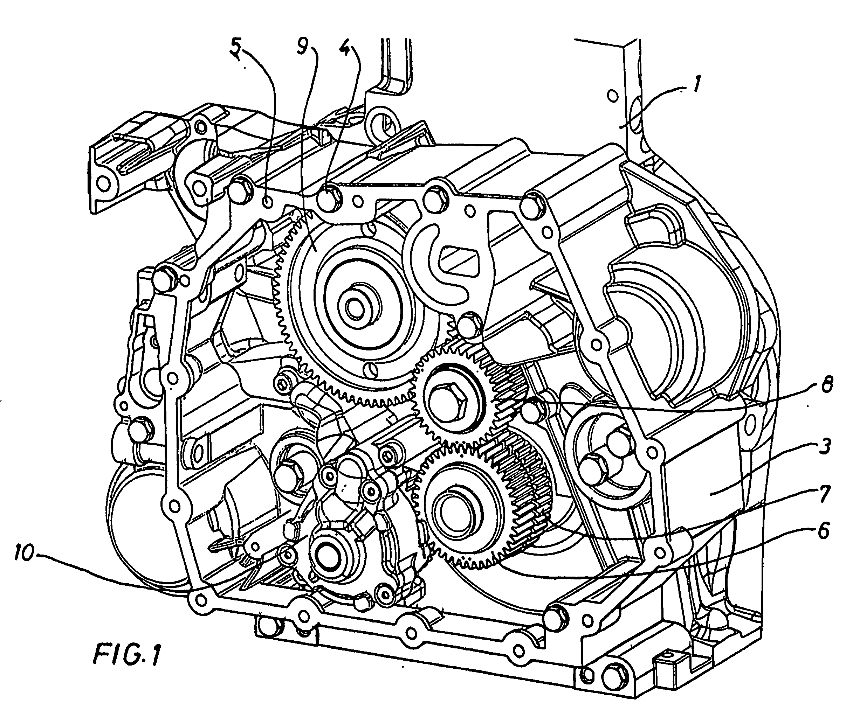

Auf den Fortsatz der Kurbelwelle 2 ist ein Rädertriebzahnrad 6 und ein Massenwellentriebzahnrad 7 drehfest befestigt. Das Rädertriebzahnrad 6 weist einen Eingriffswinkel von 18,5° und das Massenwellentriebzahnrad 7 einen Eingriffswinkel von 11,5° auf. Das Rädertriebzahnrad 6 steht im Eingriff mit einem Stufenzahnrad 8, das wiederum mit einem Nockenwellenzahnrad 9 kämmt. Ebenfalls von dem Rädertriebzahnrad 6 wird ein Ölpumpenzahnrad 10a angetrieben, das Bestandteil einer in dem Rädertriebgehäuse 3 angeordneten Ölpumpe 10 ist. Die Ölpumpe 10 weist ein Schmierölpumpengehäuse auf, das an in dem Kurbelgehäuse 1 integrierte Saug- und Druckölkanal leitungslos anschließt. Das Öldruckregelventil ist in das Schmierölpumpengehäuse integriert und so ausgebildet, dass es bei Funktion in Richtung Kurbelgehäuse 1 absteuert. Der Druckölkanal beziehungsweise seine Mündung in dem Kurbelgehäuse 1 ist bevorzugt als Kernmarke oder Putzöffnung in dem Kurbelgehäuse 1 ausgeführt. Diese in Fig. 1 dargestellte Ausbildung betrifft die bei jeder Brennkraftmaschine der entsprechenden Baureihe vorhandenen Basis-Konstellation, bei der (noch) kein Massenausgleichsgetriebe und keine zusätzlichen Hydraulikpumpen montiert sind.

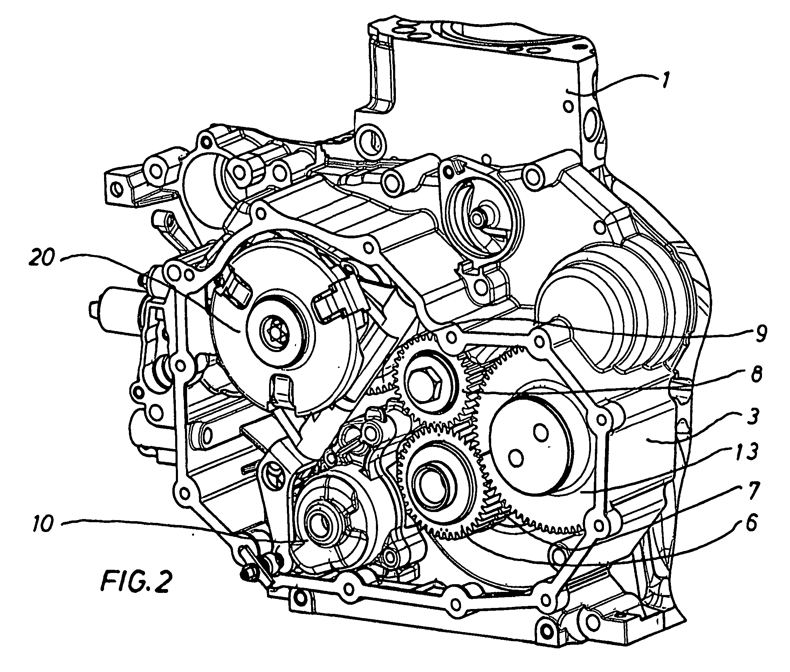

In der Ansicht nach Fig. 2 ist zusätzlich insbesondere vor dem Nockenwellenzahnrad 9 ein mechanisches Reglermesswerk 20 für die Einspritzeinrichtung montiert.

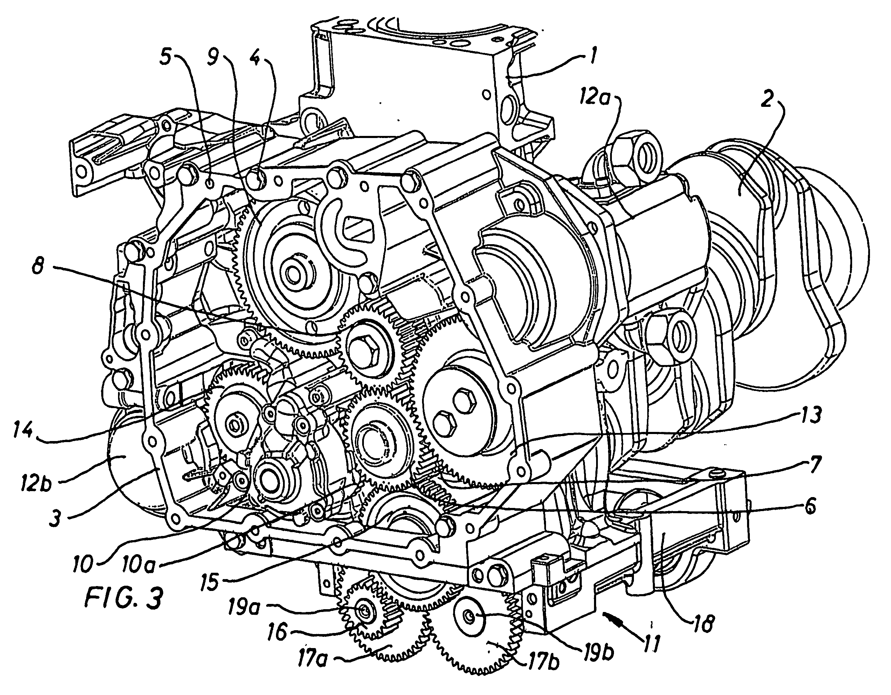

Dagegen betrifft die in Fig. 3 dargestellte Ausbildung die Maximal-Konstellation, bei der zusätzlich ein Massenausgleichsgetriebe 11 und Hydraulikpumpen 12a, 12b montiert sind. Die Hydraulikpumpe 12a wird über ein Hydraulikpumpenzwischenrad 13 von dem Rädertriebzahnrad 6 angetrieben. Das Hydraulikpumpenzwischenrad 13 ist baugleich mit dem Nockenwellenzahnrad 9. Die Hydraulikpumpe 12b wird über ein Zwischenrad 14 von dem Ölpumpenzahnrad 10a angetrieben. Hierzu ist die Lagerung der Ölpumpe 10 bzw. des Ölpumpenzahnrads 10a entsprechend der zu übertragenden Leistung dimensioniert. Insgesamt können die beiden Hydraulikpumpen eine Leistung bis zu 35 kW aufnehmen.

Das Massenausgleichsgetriebe 11 wird über ein Ausgleichswellenzwischenrad 15 angetrieben, das seinerseits ein Antriebszahnrad 16 antreibt, das axial vor einem Ausgleichswellenzahnrad 17a angeordnet ist, das mit einem zweiten Ausgleichswellenzahnrad 17b in Eingriff steht. Diese beiden Ausgleichswellenzahnräder 17a, 17b sind mit den Massenausgleichswellen 19a, 19b verbunden, die in dem Getrieberahmen 18 des Massenausgleichsgetriebes 11 gelagert sind. Dieser Getrieberahmen 18 wird direkt an der Unterseite des Kurbelgehäuses 1 festgeschraubt, wobei durch den speziellen Eingriffswinkel von 11,5° des Massenwellentriebzahnrads 7 keine Einstellung des Zahneingriffs bzw. des Zahnflankenspiels des Massenwellentriebzahnrads 7 und des Ausgleichswellenzwischenrades 15 erforderlich ist. Diese Ausbildung macht es möglich, in den Rahmen 18 Ölkanäle einzulassen, die direkt mit Ölkanälen in dem Kurbelgehäuse 1 in Verbindung stehen. Die Ölwanne ragt mit dem umlaufenden Befestigungsflansch über den Getrieberahmen hinweg bis an das Kurbelgehäuse 1 und deckt stirnseitig den unteren Flansch des Rädertriebgehäuses 3 dichtend ab.

## Patentansprüche

1. Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf unter Bildung eines Brennraums abgedeckten Zylinder bewegbar ist und in dem Zylinderkopf Gaswechselventile angeordnet sind, die von einer Nockenwelle betätigt werden, die über ein Getriebe mit einem auf der Kurbelwelle angeordneten Rädertriebzahnrad verbunden ist, wobei weiterhin in den Brennraum von einem Einspritzpumpenelement geförderter Kraftstoff einspritzbar ist sowie ein Massenausgleichsgetriebe mit zwei Ausgleichswellen vorhanden ist,
***dadurch gekennzeichnet, dass*** das Massenausgleichsgetriebe (11) in einem Getrieberahmen (18) angeordnet unterhalb der Kurbelwelle (2) an das Kurbelgehäuse (1) angebaut ist und von einem auf der Kurbelwelle (2) angeordneten Massenwellentriebzahnrad (7) angetrieben ist, das axial neben dem Rädertriebzahnrad (6) angeordnet ist.

2. Brennkraftmaschine nach Anspruch 1,
***dadurch gekennzeichnet, dass*** das Massenwellentriebzahnrad (7) einen Eingriffswinkel von 11,5° aufweist.

3. Brennkraftmaschine nach Anspruch 2,
***dadurch gekennzeichnet, dass*** zwei miteinander kämmende Ausgleichswellenzahnräder (17a, 17b) vorgesehen sind und dass axial neben einem Ausgleichswellenzahnrad (17a, 17b) ein Antriebszahnrad (16) angeordnet ist, das über ein Ausgleichswellenzwischenrad (15) mit dem Massenwellentriebzahnrad (7) in Eingriff steht.

4. Brennkraftmaschine nach einem der vorherigen Ansprüche,
***dadurch gekennzeichnet, dass*** das Rädertriebzahnrad (6) einen Eingriffswinkel von 18° - 20°, insbesondere 18,5° aufweist.

5. Brennkraftmaschine nach einem der vorherigen Ansprüche,
***dadurch gekennzeichnet, dass*** ein Nockenwellenzahnrad (9) über ein Stufenzahnrad (8) mit dem Rädertriebzahnrad (6) in Eingriff steht.

6. Brennkraftmaschine nach einem der vorherigen Ansprüche,
***dadurch gekennzeichnet, dass*** eine erste Hydraulikpumpe (12a) über ein Hydraulikpumpenzwischenrad (13) mit dem Rädertriebzahnrad (6) in Eingriff steht.

7. Brennkraftmaschine nach einem der vorherigen Ansprüche,
***dadurch gekennzeichnet, dass*** ein Ölpumpenzahnrad (10a) mit dem Rädertriebzahnrad (6) in Eingriff steht.

8. Brennkraftmaschine nach einem der vorherigen Ansprüche,
***dadurch gekennzeichnet, dass*** eine zweite Hydraulikpumpe (12b) über ein Hydraulikpumpenzwischenrad (14) mit dem Ölpumpenzahnrad (10a) in Eingriff steht.

9. Brennkraftmaschine nach einem der vorherigen Ansprüche,
***dadurch gekennzeichnet, dass*** das Hydraulikpumpenzwischenrad (13) baugleich mit dem Nockenwellenzahnrad (9) ist.

10. Brennkraftmaschine nach einem der vorherigen Ansprüche,
***dadurch gekennzeichnet, dass*** das Rädertriebgehäuse (3) ein mechanisches Reglermesswerk (20) aufnimmt, welches vormontierbar, unmittelbar im Rädertriebgehäuse (3) dem eigentlichen Rädertrieb (6, 7, 8, 9) vorgelagert ist.

## Claims

1. Internal combustion engine having a crankcase in which a crankshaft is rotatably mounted, on which at least one connecting rod which bears a piston is articulated, the piston being movable in a cylinder which is covered by a cylinder head so as to form a combustion chamber, and gas exchange valves being arranged in the cylinder head which are actuated by a camshaft which is connected via a gear mechanism to a gear-train gear wheel arranged on the crankshaft, it being possible, furthermore, to inject fuel which is delivered by an injection-pump element into the combustion chamber, and there being a mass-balancing gear mechanism with two balancing shafts, **characterized in that** the mass-balancing gear mechanism (11), being arranged in a gear-mechanism frame (18), is attached to the crankcase (1) below the crankshaft (2) and is driven by a mass-shaft gear-train wheel (7) which is arranged on the crankshaft (2) and axially next to the gear-train gear wheel (6).

2. Internal combustion engine according to Claim 1, **characterized in that** the mass-shaft gear-train wheel (7) has an angle of engagement of 11.5°.

3. Internal combustion engine according to Claim 2, **characterized in that** two balancing-shaft gear wheels (17a, 17b) which mesh with one another are provided, and **in that** a drive gear wheel (16) is arranged axially next to a balancing-shaft gear wheel (17a, 17b), which drive gear wheel (16) is in engagement with the mass-shaft gear-train wheel (7) via a balancing-shaft intermediate wheel (15).

4. Internal combustion engine according to one of the preceding claims, **characterized in that** the gear-train gear wheel (6) has an angle of engagement of from 18° to 20°, in particular 18.5°.

5. Internal combustion engine according to one of the preceding claims, **characterized in that** a camshaft gear wheel (9) is in engagement with the gear-train gear wheel (6) via a stepped gear wheel (8).

6. Internal combustion engine according to one of the preceding claims, **characterized in that** a first hydraulic pump (12a) is in engagement with the gear-train gear wheel (6) via a hydraulic-pump intermediate wheel (13).

7. Internal combustion engine according to one of the preceding claims, **characterized in that** an oil-pump gear wheel (10a) is in engagement with the gear-train gear wheel (6).

8. Internal combustion engine according to one of the preceding claims, **characterized in that** a second hydraulic pump (12b) is in engagement with the oil-pump gear wheel (10a) via a hydraulic-pump intermediate wheel (14).

9. Internal combustion engine according to one of the preceding claims, **characterized in that** the hydraulic-pump intermediate wheel (13) is structurally identical to the camshaft gear wheel (9).

10. Internal combustion engine according to one of the preceding claims, **characterized in that** the gear-train housing (3) accommodates a mechanical control measuring unit (20) which, in a manner such that it can be preassembled, is mounted ahead of the actual gear train (6, 7, 8, 9) directly in the gear-train housing (3).

## Revendications

1. Moteur à combustion interne avec un carter de vilebrequin dans lequel est monté à rotation un vilebrequin sur lequel est articulée au moins une bielle portant un piston, sachant que le piston est mobile dans un cylindre recouvert par une culasse en formant une chambre de combustion et que sont disposées dans la culasse des soupapes de gaz à changement de charge qui sont actionnées par un arbre à cames qui est relié par l'intermédiaire d'un engrenage à un pignon d'entraînement par engrenage qui est disposé sur le vilebrequin, sachant en outre que du carburant débité par un élément de pompe d'injection peut être injecté dans la chambre de combustion et qu'un engrenage d'équilibrage doté de deux arbres d'équilibrage est présent, **caractérisé en ce que** l'engrenage d'équilibrage (11) est rapporté sur le carter de vilebrequin (1) en dessous du vilebrequin (2) en étant disposé dans un bâti d'engrenage (18), et il est entraîné par un pignon (7) d'entraînement d'arbres d'équilibrage qui est disposé sur le vilebrequin (2) axialement à côté du pignon (6) d'entraînement par engrenage.

2. Moteur à combustion interne selon la revendication 1, **caractérisé en ce que** le pignon (7) d'entraînement d'arbres d'équilibrage présente un angle d'attaque de 11,5°.

3. Moteur à combustion interne selon la revendication 2, **caractérisé en ce qu'**il est prévu deux pignons (17a, 17b) d'arbres d'équilibrage qui engrènent l'un avec l'autre, et **en ce qu'**un pignon d'entraînement (16) est disposé axialement à côté d'un pignon (17a, 17b) d'arbre d'équilibrage et est en prise avec le pignon (7) d'entraînement d'arbres d'équilibrage via un pignon intermédiaire (15) d'arbres d'équilibrage.

4. Moteur à combustion interne selon l'une quelconque des revendications précédentes, **caractérisé en ce que** le pignon (6) d'entraînement par engrenage présente un angle d'attaque de 18° à 20°, notamment de 18,5°.

5. Moteur à combustion interne selon l'une quelconque des revendications précédentes, **caractérisé en ce qu'**un pignon (9) d'arbre à cames est en prise avec le pignon (6) d'entraînement par engrenage par l'intermédiaire d'un pignon (8) à gradin.

6. Moteur à combustion interne selon l'une quelconque des revendications précédentes, **caractérisé en ce qu'**une première pompe hydraulique (12a) est en prise avec le pignon (6) d'entraînement par engrenage via un pignon intermédiaire (13) de pompe hydraulique.

7. Moteur à combustion interne selon l'une quelconque des revendications précédentes, **caractérisé en ce qu'**un pignon (10a) de pompe à huile est en prise avec le pignon (6) d'entraînement par engrenage.

8. Moteur à combustion interne selon l'une quelconque des revendications précédentes, **caractérisé en ce qu'**une deuxième pompe hydraulique (12b) est en prise avec le pignon (10a) de pompe à huile via un pignon intermédiaire (14) de pompe hydraulique.

9. Moteur à combustion interne selon l'une quelconque des revendications précédentes, **caractérisé en ce que** le pignon intermédiaire (13) de pompe hydraulique est de construction identique au pignon (9) d'arbre à cames.

10. Moteur à combustion interne selon l'une quelconque des revendications précédentes, **caractérisé en ce que** le carter d'engrenage (3) reçoit un dispositif mécanique (20) de mesure et de régulation qui, en pouvant être pré-assemblé, est monté directement dans le carter d'engrenage (3) devant l'entraînement par engrenage (6, 7, 8, 9) proprement dit.
